Europäisches Patentamt

European Patent Office

Office européen des brevets

(11) Publication number: 0 344 789
A2

# EUROPEAN PATENT APPLICATION

(21) Application number: 89109960.8

(51) Int. Cl.4: G06K 19/06 , G06K 19/08

(22) Date of filing: 01.06.89

(30) Priority: 02.06.88 JP 136357/88

(43) Date of publication of application:
06.12.89 Bulletin 89/49

(84) Designated Contracting States:
FR GB IT

(71) Applicant: KABUSHIKI KAISHA TOSHIBA
72, Horikawa-cho Saiwai-ku
Kawasaki-shi Kanagawa-ken 210(JP)

(72) Inventor: Tomura, Shinya c/o Intellectual
Property Division
Kabushiki Kaisha Toshiba 1-1, Shibaura
1-chome
Minato-ku Tokyo 105(JP)
Inventor: Suzuki, Katsumi c/o Intellectual
Property Division
Kabushiki Kaisha Toshiba 1-1, Shibaura
1-chome
Minato-ku Tokyo 105(JP)
Inventor: Shibuya, Kunihiro c/o Intellectual
Property·Div.
Kabushiki Kaisha Toshiba 1-1, Shibaura
1-chome
Minato-ku Tokyo 105(JP)

(74) Representative: Henkel, Feiler, Hänzel &
Partner
Möhlstrasse 37
D-8000 München 80(DE)

(54) Recording card.

(57) A portable recording card includes a substrate
(2) and an information-carrying layer (4) formed
thereon. The information-carrying layer carries a
visualizable information which changes from a first
color to a second color at a first color-changing
temperature, and from the second color to the first
color at a second color-changing temperature.

F I G. 1

# Recording card

The present invention relates to a card in which visual recorded contents are updated such as a prepaid card used in a telephone set, a ticket issuing machine of a means of transportation or an ID card and the like.

In recent years, a prepaid card is used in place of coins in a ticket issuing machine and the like. Each time a card of this type is used, the date of use, the remaining amount and the like are printed on the card so as to be checked with an eye. Such a card is disclosed in Japanese Patent Disclosure (Kokai) 61-48176. In this card, the date and the remaining amount are printed. When the number of times of use of the card is not limited and its face value is high, however, a printing space may be used up as the number of times of use increases before the remaining amount is entirely consumed. Therefore, a system of forming small holes to roughly indicate the remaining amount, the number of times of use and the like in place of printing is adopted. In addition, in the case of an ID card, a new card must be made each time recorded items are updated because old recorded items cannot be rewritten.

It is an object of the present invention to provide a portable recording card in which the recorded information can be rewritten when necessary.

The present invention provides a portable recording card comprising a substrate, and an information-carrying layer formed on a surface of said substrate, said information-carrying layer carrying a visualizable information changing from a first color to a second color at a first color-changing temperature, and changing from said second color to said first color at a second color-changing temperature.

This invention can be more fully understood from the following detailed description when taken in conjunction with the accompanying drawings, in which:

Fig. 1 is a sectional view showing a recording card according to the present invention;

Figs. 2 and 4 are plan and rear views, respectively, of the card shown in Fig. 1;

Fig. 3 is a graph showing a relationship between a temperature and color changes of a heat-sensitive recording layer;

Figs. 5 to 9 are sectional views showing recording cards according to other embodiments of the present invention, respectively;

Fig. 10 shows an arrangement of an internal mechanism of a card processor for processing the card of the invention; and

Fig. 11 shows the construction of a card processor.

In a recording card of the present invention, cloudy characters, symbols and the like printed on a heat-sensitive recording layer (information-carrying layer) become transparent and are erased upon heating at a predetermined temperature or more. When the card is heated up to a temperature higher than the predetermined temperature or more, however, cloudy characters, symbols and the like can be printed again. Therefore, not only recorded items on an ID card can be rewritten, but also those on a prepaid card can be rewritten sequentially from the oldest record when a printing area becomes full, thereby enabling continuous recording.

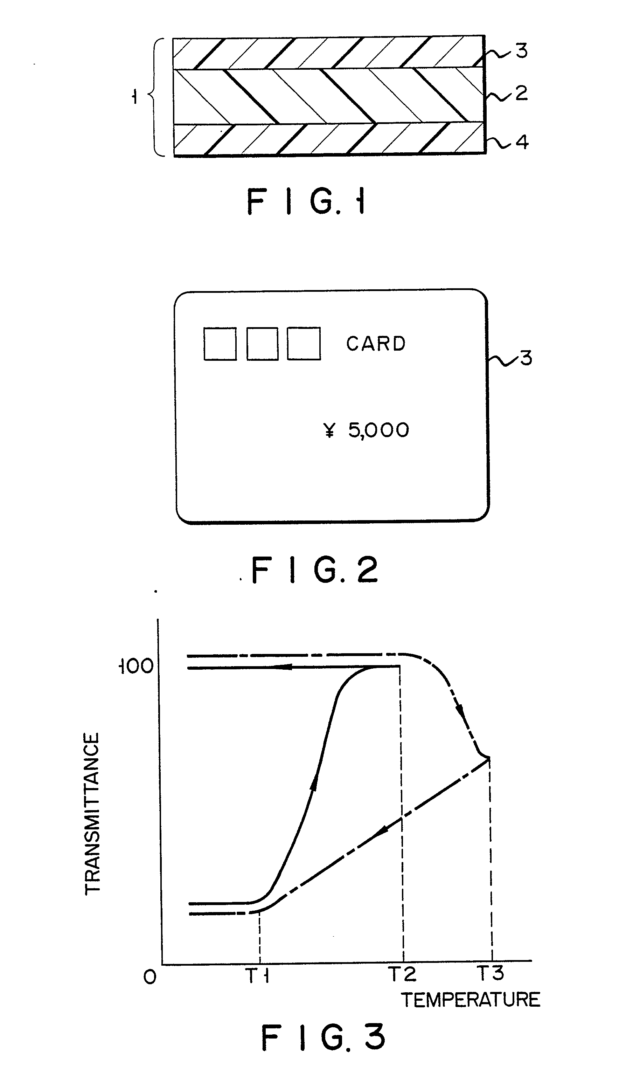

Fig. 1 is a sectional view showing a portable recording card of the present invention. A recording card 1 of the present invention comprises a substrate 2, and a printing layer 3 and a heat-sensitive recording layer (information-carrying layer) 4 formed on respective surfaces of the substrate.

Examples of a material of the substrate 2 are plastic, glass, paper, cloth and a metal. A preferable example is a material capable of serving as a background against which a color change of the recording layer 4 can be clearly discriminated.

As shown in Fig. 2, a face value, patterns and the like of the card 1 are printed on the surface of the printing layer 3 before the card is used. These printed contents are not changed during use of the card. Examples of a printing system of the printing layer 3 are heat-sensitive color development, heat transfer and discharge breakdown.

Recorded contents of the recording layer 4 can be changed as a color changes upon heating. The color changes at two temperatures: at one temperature, the color changes from a first color (e.g., cloudy) to a second color (e.g., transparent); and at the other temperature, the second color to the first color.

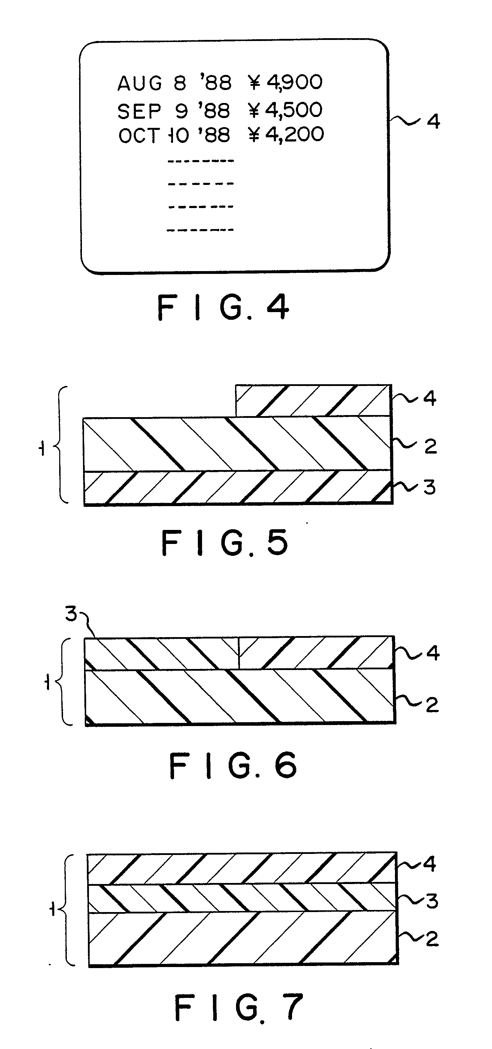

A relationship between the temperature and the color of the heat-sensitive recording layer is, e.g., as shown in Fig. 3. When the cloudy heat-sensitive recording layer at a temperature T1 (room temperature) is heated up to a temperature T2 as indicated by a solid line, it becomes transparent, and its recorded contents are erased. The transparent heat-sensitive recording layer remains the same even when the temperature returns to T1 as indicated by a solid line. Thereafter, the temperature is increased as indicated by a broken line. In this case, the color does not change when the temperature is increased up to T2. When the temperature is increased up to T3, however, the color transits to a cloudy state to enable new recording. Thereafter, the color does not change when the temperature is decreased down to T1 as indicated by a dash-and-dot line. In this manner, recording as shown in Fig. 4 can be continuously performed even after a printing area is used up.

As described above, the heat-sensitive recording layer has two state transition temperatures. A heat-sensitive member as a material of the heat-sensitive recording layer comprises an organic low-molecular substance and a polymer.

A refractive index of the organic low-molecular substance changes as a state changes upon heating. This state is maintained by a mutual reaction with the polymer even after a temperature is reduced thereafter. The color of characters, symbols and the like used in recording can be changed by utilizing this refractive index change, thereby erasing or updating the recorded contents. The organic low-molecular substance may be at least one member selected from the group consisting of a saturated and unsaturated fatty acid having 10 to 30 carbon atoms such as palmitic acid, arachic acid, behenic acid, oleic acid, linoleic acid and linolenic acid, and an ester, an amide, and an ammonium salt thereof,. and a thioalcohol carboxylic ester; a saturated or unsaturated hydrocarbon containing an alicyclic group and a halogenated hydrocarbon, a saturated or unsaturated halogenated fatty acid, an aryl carboxylic acid, a halogenated aryl carboxylic acid, and an ester, an amide and an ammonium salt thereof. The number of carbon atoms of each compound is 10 to 60, preferably 10 to 38, and more preferably 10 to 30.

The polymer as the other heat-sensitive member component maintains the state of the organic low-molecular substance changed upon heating even when the temperature is decreased. In order to perform high-sensitivity recording, a low-molecular polymer having a polymerization degree of 100 or less is preferable. Examples of such a polymer are vinyl chloride-alkylacrylate-based, alkylacrylate-vinylidene fluoride-based, alkylmethacrylate-vinylidene fluoride-based, vinyl methyl ketone-vinylidene fluoride-based, styrene-alkyl vinyl ether-based, and alkylacrylate-vinyl acetate-based copolymers. Examples of the alkylacrylate are methyl acrylate and n-propyl acrylate, and examples of the alkylmethacrylate are ethyl methacrylate and isobutyl methacrylate. Vinylidene fluoride-based polymer including vinylidene fluoride trifluoroethylene and vinylidene fluoride-vinyl fluoride copolymers can also be used.

These polymers are described in Japanese Patent Disclosure (Kokai) Nos. 57-82087 and 61-258854 and Electrophotographic Society 4th Nonimpact Printing Technique Symposium Articles (1987, July) P. 57.

In addition, a copolymer of an acrylic ester or methacrylic ester with styrene, acrylonitrile or the like may also be used.

A mixing ratio of an organic low-molecular substance : a polymer is preferably 1 : 3 to 16 (weight ratio). If the ratio of the polymer is less than three, it is difficult to obtain a heat-sensitive recording layer which homogeneously holds, in the polymer, the organic low-molecular substance for causing a color change. If the ratio of the polymer exceeds 16, recorded contents cannot be clearly read because the content of the organic low-molecular substance is relatively small. The organic low-molecular substance is preferably, homogeneously dispersed in the polymer and entirely or partially miscible with in the polymer.

The thickness of the heat-sensitive layer is preferably 5 to 100 $\mu$m. If the thickness is smaller than 5 $\mu$m, a contrast is degraded. If the thickness is larger than 100 $\mu$m, a heat-sensitivity is degraded.

As shown in Fig. 5, the heat-sensitive recording layer 4 may be formed not entirely but partially on the surface of the substrate 2 opposite to the printing layer 3. In addition, the heat-sensitive recording layer 4 may be formed on the same side as the printing layer 3 so as not to be stacked thereon as shown in Fig. 6, or formed on the printing layer 3 as shown in Fig. 7.

In addition to the organic low-molecular substance and the polymer described above, an additive may be added as a heat-sensitive member component for forming the heat-sensitive recording layer in order to perform recording at a low temperature by decreasing the temperatures T2 and T3. The additive is preferably miscible with at least one of the other two components.

The additive may be one or more polymers selected from the group consisting of polyvinyl chloride, a polyvinyl ester, a vinyl chloride-based copolymer such as a vinyl chloride-vinyl acetate copolymer and a vinyl chloride-vinyl acetate-vinyl alcohol copolymer, a vinylidene chloride-based copolymer such as a vinylidene chloride-vinyl chloride copolymer and a vinylidene chloride-acrylnitrile copolymer, and a polyester. The content of the additive is 0.1 to 90 wt%, and preferably 1 to 80 wt% with respect to a mixture consisting of the other two components.

When an alkylacrylate-based or alkylmethacrylate-vinylidene fluoride-based polymer is selected as the polymer component, examples of a plasticizer as an additive are a vinyl ester-based polymer, i.e., an aliphatic vinyl carboxylate such as vinyl acetate and vinyl propionate, and an aromatic vinyl carboxylate such as vinyl benzoate. The additive may be one or more polymers selected from the group consisting of polyvinyl chloride, a polyvinyl ester, a vinyl chloride-based copolymer such as a vinyl chloride-vinyl acetate copolymer and a vinyl chloride-vinyl acetate-vinyl alcohol copolymer, a vinylidene chloride-based copolymer such as a vinylidene chloride-vinyl chloride copolymer and a vinylidene chloride-acrylonitrile copolymer, and a polyester. The content of the plasticizer is 0.1 to 90 wt%, and preferably 1 to 80 wt% with respect to the mixture consisting of the other two components.

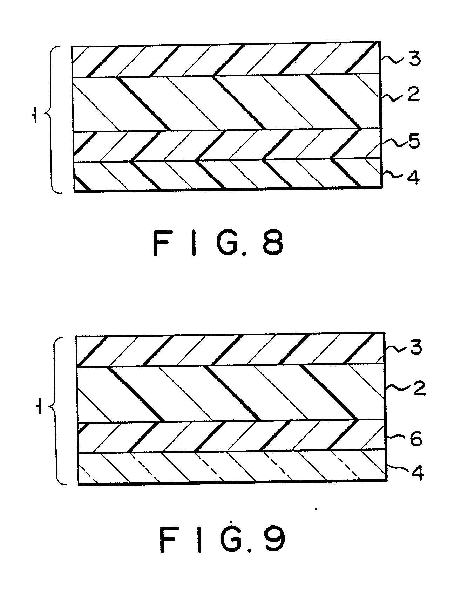

A recording card of this type is often read not only with an eye but also by a machine. For this reason, as shown in Fig. 8, a magnetic recording layer 5 may be formed between the substrate 2 and the heat-sensitive recording layer 4 so that the same contents as recorded in the heat-sensitive recording layer 4 can be magnetically recorded or read out by a machine. Examples of a material of the magnetic recording layer are iron oxide, ferrite and a rare earth element. Referring to Fig. 8, reference numeral 1 denotes a recording card; and 3, a printing layer.

In order to easily read the recorded content in the heat-sensitive recording layer, a colored layer 6 with an arbitrary color may be formed between the substrate 2 and the heat-sensitive recording layer 4, as shown in Fig. 9. The color of a material of the colored layer may be black, gray, blue, silvery or the like as long as the color has a contrast. Referring to Fig. 9, reference numeral 1 denotes a recording card; and 3, a printing layer.

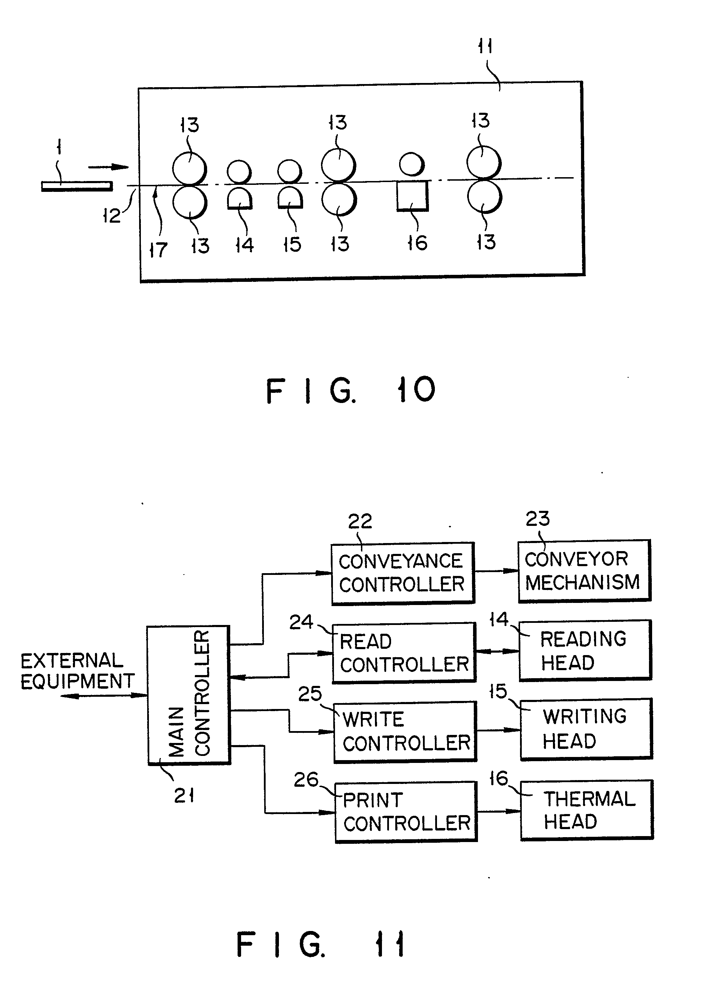

Fig. 10 schematically shows an arrangement of an internal mechanism of a card processor 11 for processing the card 1 shown in Fig. 8. The card 1 inserted from an insertion port 12 is taken into a main body and conveyed by a conveyor path 17. Conveyor rollers 13 as a conveyor mechanism 23 for conveying the card 1 are arranged along the conveyor path 17. A reading head 14 for reading out magnetic information from the magnetic recording layer 5 of the card 1, a writing head 15 for updating the magnetic information in the magnetic recording layer 5, and a thermal head 16 for recording the date of use and a remaining amount as a use state (use history) in the heat-sensitive recording layer 4 of the card 1 or erasing the use state recorded in the recording layer 4 are also arranged along the conveyor path 17.

In the apparatus shown above, an additional thermal head can be provided on the upper side of the conveyor path 17. In this case, the card can be printed on its both faces. Further, the thermal head or heads can be arranged at any location along the conveyor path 17 between the reading head 14 and the exit. Moreover, an image eraser section may be provided at any location on one or both sides of the conveyor path between the insertion port and the thermal head. The image eraser section erases an image by heating the recording layer to a predetermined temperature.

As shown in Fig. 11, the card processor 11 comprises a conveyance controller 22 for driving the conveyor mechanism 23, a read controller 24 for reading out magnetic data including the date of use, a remaining amount, and the like as a use state by the reading head 14, a write controller 25 for writing the magnetic data including the data of use, the remaining amount, and the like as the use state to be updated by the writing head 15, a print controller 26 for driving the thermal head 16, thereby recording or erasing the date of use, the remaining amount, and the like as the use state, and a main controller 21 for controlling the overall system.

The main controller 21 is connected to a controller of a ticket issuing machine main body or telephone set main body as an external equipment (not shown). The main controller 21 outputs information including the last date of use, a remaining amount, and the like to the controller or receives information including the date of use, a remaining amount, and the like to be updated therefrom.

An operation of the above arrangement will be described below. Assume that a user inserts the card 1 in the insertion port 12 (of the card processor 11) of a ticket issuing machine or telephone set (not shown). The card 1 inserted in the insertion port 12 is conveyed by the conveyor mechanism 23. The reading head 14 reads out magnetic information including the last date of use, a remaining amount, and the like from the magnetic recording layer 5 of the card 1. The main controller 21 outputs the magnetic information including the last date of use, the remaining amount, and the like to the controller of the ticket issuing machine or telephone set main body. In this manner, ticket purchase or telephone communication is performed by the ticket issuing machine or telephone set main body.

When the information including the date of use, the remaining amount, and the like to be updated is supplied from the controller of the ticket issuing machine or telephone set main body, the main controller 21 causes the writing head 15 to rewrite the contents of the magnetic recording layer 5 of the card 1 with the information including the date of use, the remaining amount, and the like to be updated. At the same time, the main controller 21 causes the thermal head 16 to additionally record the information including the date of use, the remaining amount, and the like in the heat-sensitive recording layer 4. If the recording layer 4 is full of information upon additional recording, the oldest recorded contents are erased, and the information including the date of use, the remaining amount, and the like is recorded in a location of the erased data.

As described above, a heat-sensitive recording layer is formed on a card substrate and is heated and changed from a transparent state to an opaque state, thereby recording (displaying) numerals, characters, symbols, and the like. In addition, these recorded (displayed) symbols and the like can be rewritten if necessary.

Example 1

As shown in Fig. 1, a printing layer 3 for heat transfer was formed (or coated) on a black substrate 2 consisting of a polyester, and a 25-μm thick transparent heat-sensitive recording layer 4 consisting of a material prepared by mixing behenic acid as an organic low-molecular substance and a vinylidene chloride-acrylnitrile copolymer at a weight ratio of 1 : 0.25 was formed on the entire surface of the substrate opposite to the printing layer, thereby manufacturing a recording card 1. A face value, patterns and the like of the card 1 were printed on the printing layer 3 by a heat transfer method. A thermal head (not shown) on which a pattern of the same face value as printed on the printing layer was formed was heated to 75°C and urged against the recording layer 4. As a result, a cloudy trace was formed at a portion at which the head touched. The cloudy trace could be clearly distinguished from the black substrate 2 seen through the surrounding transparent heat-sensitive recording layer 4. The cloudy trace did not disappear when the temperature returned to room temperature. When the recording layer was heated up to 85°C by using the thermal head, the cloudy trace was erased and kept transparent even after the temperature returned to room temperature. When the thermal head was heated up to 75°C again and urged against the recording layer 4 which had recovered transparency, a cloudy trace was formed at a portion at which the head touched. The trace did not disappear even after the temperature returned to room temperature. Therefore, if a pattern of a date, an amount of money or the like is formed on a printing portion of the thermal head, a card obtained by using this thermal head can be used as a prepaid card or an ID card capable of updating the recorded contents.

Example 2

As shown in Fig. 8, a printing layer 3 was formed on a surface of a substrate 2 using the same materials and following the same procedures as in Example 1, and a 20-μm thick magnetic recording layer 5 consisting of cobalt iron oxide was formed on the surface of the substrate 2 opposite to the printing layer 3. A heat-sensitive recording layer 4 consisting of an octadecanoic octadecyl ester in addition to the same components as in Example 1 was formed on the magnetic recording layer 5, thereby manufacturing a recording card 1. Following the same procedures as in Example 1, desired items were recorded on the heat-sensitive layer 4 by using a thermal head (not shown) heated to 73°C. Thereafter, the same items were magnetically recorded in the magnetic recording layer 5 by using a machine.

Following the same procedures as in Example 1, the heat-sensitive recording layer 4 was heated up to 90°C to erase the recorded items thereon. In this case, however, the magnetically recorded contents were not erased.

Following the same procedures as in Example 1, the thermal head at 73°C was urged against the heat-sensitive layer 4 to record desired items. The same contents were recorded in the magnetic recording layer 5.

In this manner, when a printing area of the heat-sensitive recording layer of the prepaid card is used up, the contents recorded from the start of use of the card can be kept stored in the magnetic recording layer while the recorded contents on the heat-sensitive recording layer are arbitrarily erased.

Example 3

As shown in Fig. 9, a printing layer 3 was formed on a surface of a substrate 2 using the same materials and following the same procedures as in Example 1, and a silvery colored layer 6 comprising a 2-μm thick Aℓ vapor deposition film was formed on the surface of the substrate 2 opposite to the printing layer 3. A transparent heat-sensitive recording layer 4 consisting of the same components as in Example 1 was formed on the colored layer 6, thereby manufacturing a recording card 1.

Following the same procedures as in Example 1, a thermal head was heated to form a cloudy trace on the heat-sensitive recording layer 4. The cloudy head trace had a clear contrast with respect to the silvery colored layer 6 seen through the surrounding transparent heat-sensitive recording layer 4 and therefore could be discriminated therefrom very easily.

## Claims

1. A portable recording card comprising:
a substrate (2); and
an information-carrying layer (4) formed on a surface of said substrate, said information-carrying layer carrying a visualizable information changing from a first color to a second color at a first color-changing temperature, and changing from said second color to said first color àt a second color-changing temperature.

2. The card according to claim 1, characterized by further comprising a magnetic recording layer (5).

3. The card according to claim 1, characterized in that said information-carrying layer (4) covers a part of the surface of said substrate (2).

4. The card according to claim 1, characterized by further comprising a colored layer (6) formed between said substrate (2) and said information-carrying layer (4).

5. The card according to claim 1, characterized in that said information-carrying layer (4) comprises an organic low-molecular substance and a polymer.

6. The card according to claim 5, characterized in that said information-carrying layer (4) contains an additive.

7. The card according to claim 5, characterized in that said organic low-molecular substance is selected from the group consisting of a saturated and unsaturated fatty acid having 10 to 30 carbon atoms, and an ester, an amide and an ammonium salt thereof.

8. The card according to claim 6, characterized in that said additive is selected from the group consisting of polyvinyl chloride, a polyvinyl ester, a vinyl chloride-based copolymer including a vinyl chloride-vinyl acetate copolymer and a vinyl chloride-vinyl acetate-vinyl alcohol copolymer, a vinylidene chloride-based copolymer such as a vinylidene chloride-vinyl chloride copolymer and a vinylidene chloride-acrylonitrile copolymer, and a polyester.

F I G. 1

F I G. 2

F I G. 3

EP 0 344 789 A2

AUG 8 '88  ¥ 4,900

SEP 9 '88  ¥ 4,500

OCT 10 '88  ¥ 4,200

-------

------

------

------

~ 4

F I G. 4

F I G. 5

F I G. 6

F I G. 7

F I G. 8

F I G. 9

F I G. 10

F I G. 11